# EUROPEAN PATENT APPLICATION

(11) **EP 4 840 316 A1**
(43) Date of publication of application: **18.11.2026**
(21) Application number: 25176011.2
(22) Date of filing: 13.05.2025
(51) Int. Cl.: A21C 9/04, A21C 15/00, A23P 20/15

(54) **A TOPPING APPLYING SYSTEM**

(71) Applicant: Danmatic, automated Bakery Systems A/S, 8800 Viborg (DK)
(72) Inventor: Sørensen, Michael Koch, 8800 Viborg (DK); Christensen, Søren, 8880 Viborg (DK); Vuga, Nelson Sabbath, 8880 Viborg (DK)
(74) Representative: Patrade A/S

(57) **Abstract**

The present invention relates to an apply system (100) adapted for applying topping onto associated product(s), said system comprising:
- a support (200), such as a conveyor, a robot and/or a tray, for supporting the associated product(s),
- a container (300), said container comprising:
- a plurality of gates (400),

wherein, the gates are movably arranged at the bottom of the container.

Furthermore, the invention relates to a method for applying topping onto a product.

## Description

### FIELD OF THE INVENTION

The present invention relates to an apply system adapted for applying topping onto associated product(s), said system comprising:
- a support, such as a conveyor, a robot and/or a tray, for supporting the associated product(s),
- a container, said container comprising:
   - a plurality of gates,
wherein, the gates are movably arranged at the bottom of the container.

Furthermore, the invention relates to a method for applying topping onto a product, wherein said method comprises the steps of:
- providing products on a support, such as a conveyor, a robot and/or a tray,
- moving the products in a first direction by moving the support in a moving direction or moving the container in a moving direction,
- detecting the products or the absence of products, preferably by a sensor,
- receiving a signal, such as a command signal, based on the detecting, preferably from a control system,
- opening one or more gates of a container by moving the gates in a first horizontal direction based on the signal,
   - the opening movement being automatically performed, preferably by a motor or a (pneumatic) cylinder,
   - said opening of the gate(s) being made while the product is moving under the gates of the container and/or while the container is moving over the support,
- applying topping onto at least a part of the products, preferably applying topping onto at least substantially a first half part of the product.

### BACKGROUND OF THE INVENTION

Within the area of applying topping to products, such as applying seeding onto a bakery product, the waste of topping when automatically applying topping is intolerable high.

Even though numerous solutions of topping applying systems are available today, none of those systems provides a system wherein the topping is applied in a targeted manner.

The systems available therefore alle have the unacceptable high rate of topping waste.

Hence, an improved system, preferably a non-damaging, efficient and reliable system, suitable for applying topping on a product would be advantageous, and moreover a resistant, mechanical strong, economically, sustainable system with longevity would be advantageous.

### OBJECT OF THE INVENTION

It is an object of the present invention to provide an alternative to the prior art.

In particular, it may be seen as an object of the present invention to provide a system that solves the above mentioned problems.

### DESCRIPTION OF THE INVENTION

Thus, the above described object and several other objects are intended to be obtained in a first aspect of the invention by providing an apply system (100) adapted for applying topping onto associated product(s), said system comprising:
- a support, such as a conveyor, a robot and/or a tray, for supporting the associated product(s),
- a container, said container comprising:
   - a plurality of gates,
wherein, the gates are movably arranged at the bottom of the container.

In the context of the present invention, an "apply system" may cover numerous different products to be applied toppings and numerous different toppings to be applied. Examples of products may be bakery products, confectionery, cake, ice, yogurt, etc. Examples of toppings may be seeding, (sugar) sprinkle, dust, powder, nuts, etc.

The system preferably applies to eatable toppings on eatable products, thereby handling foodstuff. However, the system may not necessarily be limited to that.

In the context of the present invention, a "support/supporting" may be understood as holding, transporting and/or the like.

The support is preferably provided under the products.

The support can be either directly in contact with the product, or indirectly in contact with the product, such as via a form, mould, plate, sheet, pan, etc.

In the context of the present invention, "(movable) arranged" may be understood as mounted, positioned or the like.

Examples of a support may be
- A conveying system, such as one or more conveyors, moving the product(s).
- A robot moving the products under a container, potentially on a tray.
- A stationary base/support, where the container is moving over stationary products of the base/support.
- The container may be a stationary container or a moving container.

The invention is particularly, but not exclusively, advantageous for providing a system for automatically applying topping to a product. The applying is made while either the support is moving and/or the container is moving, thereby by a system in movement.

Moreover, the system applies the topping specifically targeted to the shape, size, form etc. of the product and the amount of topping not being applied to the product but ending up as waste topping is decreased enormously and may even be completely eliminated.

Furthermore, the system may detect if products in a (predetermined) arrangement, such as one or more row(s)/array(s), is missing, and thereby does not apply topping at the spot(s) of the missing product(s).

In one embodiment of the invention, said container is arranged on a frame for positioning the container above the support.

The embodiment is particularly, but not exclusively, advantageous for ensuring a positioning of the container and the support is optimal in relation to each other.

In one embodiment of the invention, the gates are movable in a horizontal direction,
- preferably, wherein the gates are adapted to automatically being moved in a horizontal direction, such as by a motor or a (pneumatic) cylinder.

The embodiment is particularly, but not exclusively, advantageous for ensuring an optimal and correct movement of the gates.

In one embodiment of the invention, the gates are movable in a transverse direction relative to the container.

The embodiment is particularly, but not exclusively, advantageous for allowing the container to obtain an arrangement with more gates arranged at the bottom, thereby allowing more alternatives of arrangements of products, such as one or more row(s)/array(s).

In one embodiment of the invention, the gates comprise a cutout,
- preferably said cutout having the shape of the half shape of the product to be applied topping,
said preferable shapes of the cutouts may being:
- shape of a half circle,
- shape of a half eclipse,
- shape of a half triangle,
- shape of a half quadrilateral, and/or
- shape of a half éclair.

The embodiment is particularly, but not exclusively, advantageous for allowing the application of topping on more or less all shapes, sizes and forms of products.

Within the context of the invention, it should be understood that the shape of the cutout(s) in the gates may not only be corresponding to a half shape of the product.

The shape of the cutout(s) may also be the "full" shape, size and/or form of the product, such as full circle, a triangle, a quadrilateral, several small holes, etc.

Thereby full geometries are thereby also a preferred embodiment of the invention.

In one embodiment of the invention, the gates comprise at least one recess for enabling sliding of the gates in a horizontal direction,
- preferably two recesses arranged at least substantially at two sides of the gates.

The embodiment is particularly, but not exclusively, advantageous for providing a secure and efficient way of enabling moving the gates.

Moreover, exchanges of the gates can also easily be obtained.

In one embodiment of the invention, the system further comprises:
- a brush
   and/or
- a plate.

The embodiment is particularly, but not exclusively, advantageous for obtaining an efficient allocation/distribution of topping in the container, especially by the brush, when rotating. Thereby, the risk of a block of topping in the container is decreased.

Also, the brush and thereby the stirring of the topping in the container is improved.

Moreover, the brush and/or the plate provides an improved and effective allocation/distribution of topping on the products from the container.

The design of the plate is preferably adapted to the topping that is to be sprinkled.

A customer may replace the plate when changing to a different topping.

Similarly, changing the topping may require replacing the brush.

The plate and brush are preferably both arranged in the container, however in some embodiments there may be only a plate or a brush.

In one embodiment of the invention, the plate comprises holes,
- said holes preferably being arranged in a middle section of the plate, and/or
- said holes preferably being holes in one or more rows on the plate,
preferably the plate is movable in a longitudinal direction relative to the container, preferably the plate is adapted to be insertable from an end of the container, such as insertable through a cutout in the end of the container.

Within the invention, "holes" may be understood as apertures or the like.

In an embodiment of the invention, the plate is at least partly a perforated plate.

The embodiment is particularly, but not exclusively, advantageous for providing an improved and effective allocation/distribution of topping on the products from the container.

In one embodiment of the invention, the brush is arranged rotatably in the bottom part, such as the lower half part of the container,
- preferably the brush is adapted to be insertable from an end of the container, such as insertable through a cutout in the end of the container.

The embodiment is particularly, but not exclusively, advantageous for providing an easy mounting and exchanging possibility of the brush.

Also, the brush can be mounted in the container while the plate and/or the gates are exchanging or moved.

In one embodiment of the invention, the apply system further comprises:
- a sensor for detecting a product and/or the absence of a product.

Within the invention, it should be understood that the sensor detects a target, and the target is preferably the product.

The embodiment is particularly, but not exclusively, advantageous for saving the waste of sprinkle, such as up to 50% or more.

The saving is preferably obtained by decreasing the amount of topping that is not landing on the products but next to and/or around the products.

Furthermore, easier cleaning is obtained, for instance since no topping is laying around the products, which normally had to be removed and cleaned up.

It is also a great advantage, that when there is no product detected, there will be no topping applied in that empty place or in that empty space in a mold.

In one embodiment of the invention, the apply system further comprises:
- a servo drive,
   preferably being adapted for receiving a signal, such as a command signal, from a control system, and transmitting the signal in order to perform a motion of the gates.

In one embodiment of the invention, the apply system further comprises:
- a PLC control, for monitoring an input of signal(s) and making decisions based upon a pattern program in order to control the output of the topping from the container, said output of topping being controlled by the motion of the gates.

The embodiments are particularly, but not exclusively, advantageous for ensuring a coordinated movement of the gates in relation to the products to be applied topping.

In one embodiment of the invention, the container further comprises a handle, preferably arranged at an end of the container.

The embodiment is particularly, but not exclusively, advantageous for easy handling, such as inserting, mounting, positioning, exchanging, etc., of the container.

In one embodiment of the invention, the product is a bakery product.

In one embodiment of the invention, the topping is seed.

In a second aspect, the invention further relates to a method for applying topping onto a product, wherein said method comprises the steps of:
- providing products on a support, such as a conveyor, a robot and/or a tray,
- moving the products in a first direction by moving the support in a moving direction or moving the container in a moving direction,
- detecting the products or the absence of products, preferably by a sensor,
- receiving a signal, such as a command signal, based on the detecting, preferably from a control system,
- opening one or more gates of a container by moving the gates in a first horizontal direction based on the signal,
   - the opening movement being automatically performed, preferably by a motor or a (pneumatic) cylinder,
   - said opening of the gate(s) being made while the product is moving under the gates of the container and/or while the container is moving over the support,
- applying topping onto at least a part of the products, preferably applying topping onto at least substantially a first half part of the product,
wherein the steps of the method can be executed in any order and/or executed simultaneously.

The second aspect of the invention is particularly, but not exclusively, advantageous for providing a method improving application of topping to a product. The application is made while either the support is moving and/or the container is moving, thereby by a system in movement.

Moreover, the method allows to apply the topping specifically targeted to the shape, size, form, etc. of the product, and the amount of topping not being applied to the product but ending up as waste topping is decreased enormously and may even be completely eliminated.

The moving provides opening for the seeds to be applied onto the bakery products.

Furthermore, the method allows for detecting if products in a (predetermined) arrangement, such as one or more row(s)/array(s), are missing, and thereby does not apply topping at the spot(s) of the missing product(s).

The method is moreover efficient and reliable.

In one embodiment of the invention, said method further comprises the steps of:
- moving the one or more gates in a second horizontal direction, being the opposite horizontal direction than the first horizontal direction, said moving performs a closing of the one or more gates of a container,
   - the movement(s) being automatically performed, preferably by a motor,
   - said closing of the gate(s) being made while the bakery is moving under the gates of the container,
- if needed applying topping onto at least a remaining part of the bakery products, preferably applying topping onto a second half of the bakery product.

The embodiment is particularly, but not exclusively, advantageous for obtaining a topping of the entire product.

In one embodiment of the invention, said method further comprises the steps of:
- filling a container with topping, and
- rotating a brush at least while moving the gates.

The embodiment is particularly, but not exclusively, advantageous for obtaining an efficient allocation/distribution of topping in the container, especially by the brush, when rotating. Thereby, the risk of a block of topping in the container is decreased.

Also, the brush and thereby the stirring of the topping in the container is improved. Moreover, the brush and/or the plate provides an improved and effective allocation/distribution of topping on the products from the container.

In a third aspect of the invention, the invention further relates to a computer-readable medium, preferably a storage medium, comprising instructions which, when executed by a computer, cause the computer to carry out one or more steps of the method.

The first, second and third aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates a container with movable gates seen from the bottom.
Figure 2a-d are real-life illustrations of the container with brush and plate.
Figure 3 illustrates an example of an apply system.
Figure 4a-c illustrates a container with gates.
Figure 5 illustrates an example of an apply system in a production system.
Figure 6 illustrates examples of targeting products to be applied topping.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

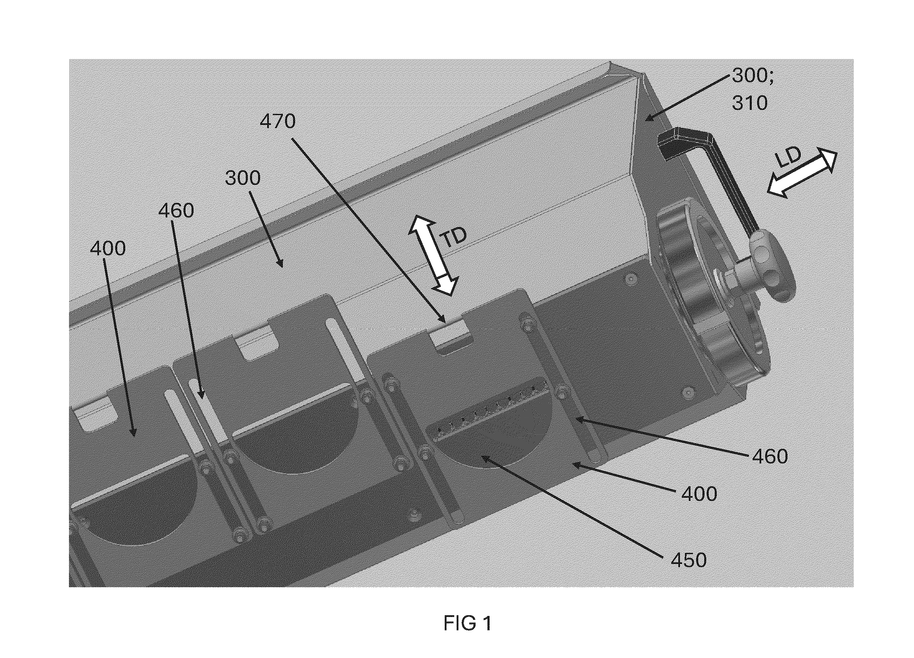

FIG. 1 illustrates a container 300 with movable gates 400, wherein, the gates 400 are movably arranged at the bottom of the container 300.

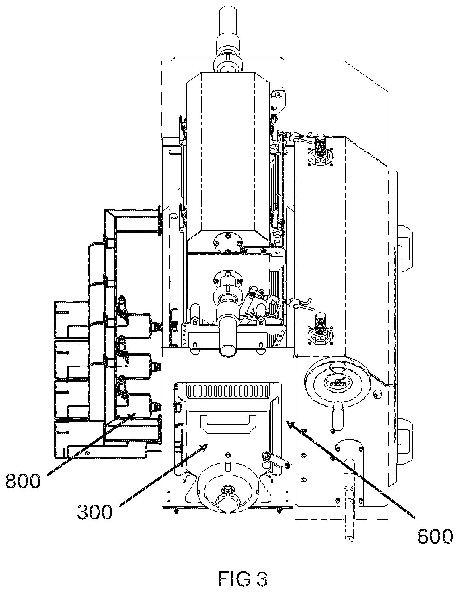

The gates 400 are movable in a horizontal direction, wherein the gates 400 are adapted to automatically being moved in a horizontal direction, such as by a motor and/or a (pneumatic) cylinder 800 (not shown, See Fig. 3).

The gates 400 are movable in a transverse direction TD relative to the container 300.

Moreover in FIG. 1 the gates 400 comprise a cutout 450, said cutout 450 having the shape of the half shape of the product to be applied topping. However, this should not necessarily be understood as a limitation to the invention.

Said preferable shapes of the cutouts 450 may shape of a half circle as illustrated. However, many other alternative shapes are also possible.

Furthermore, in FIG. 1 the gates 400 comprise at least one recess 460 for enabling sliding of the gates 400 in a horizontal direction, in Fig. 1 two recesses 460 are arranged at least substantially at two sides of the gates 400.

Also, in FIG. 1 is illustrated a portion for engagement 470 with the gates 400, such as to allow a movement arrangement, such as a cylinder and/or motor to connect to the gate 400 and thereby enable movement of the gate 400.

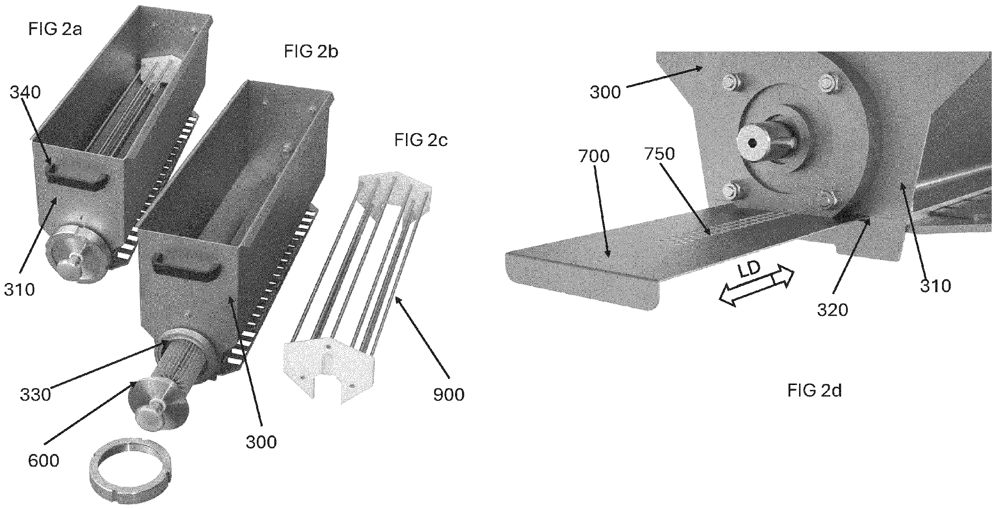

FIG. 2a-d are real-life illustrations of the container 300 with a brush 600 and a plate 700.

In FIG. 2a a container 300 is illustrated, wherein a brush 600 is inserted into the container.

In Fig. 2b a container 300 is illustrated, wherein a brush 600 is partly inserted in the container.

In FIG. 2a-b the brush 600 is adapted to be insertable from an end 310 of the container 300, such as insertable through a cutout 330 in the end 310 of the container 330.

Moreover, the brush 600 is arranged rotatably in the bottom part, such as the lower half part of the container 300.

FIG. 2c illustrates a cradle 900, which within the invention may be mounted at the bottom of the container 300.

The purpose of the cradle 900 is to loosen toppings in the container 300, that may have a tendency of "forming bridges", such as forming blockages. Such toppings could be flour and/or oregano.

The cradle 900 ensures that the topping in the container 300 does not form a blockage and thereby fall down to the brush 600.

In FIG. 2d is illustrated a plate 700 comprising holes 750.
- Said holes 750 preferably being arranged in a middle section of the plate 700, and/or
- Said holes 750 preferably being holes in one or more rows on the plate 700.

The plate 700 is movable in a longitudinal direction LD relative to the container 300, preferably the plate 700 is adapted to be insertable from an end 310 of the container 300, such as insertable through a cutout 320 in the end of the container 300, as illustrated in FIG. 2d.

The plate may be at least partly a perforated plate 700.

FIG. 3 illustrates an example of an apply system.

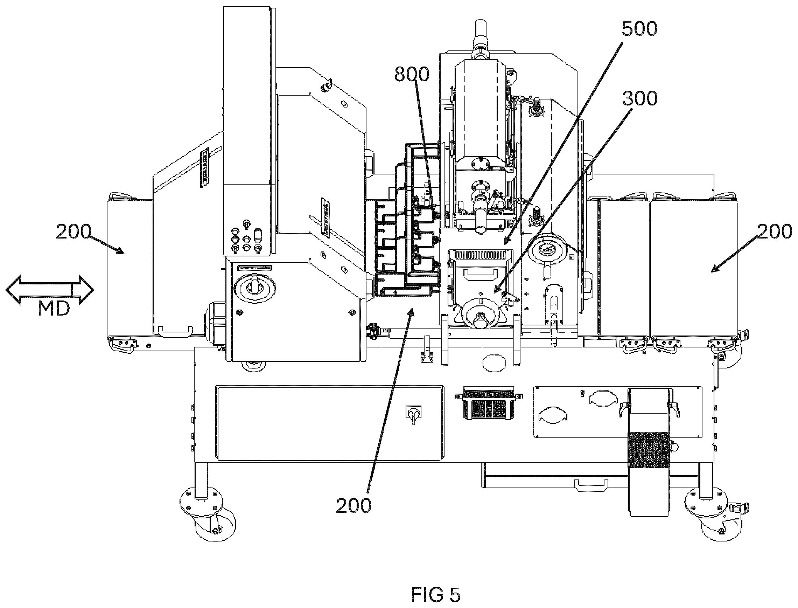

The apply system 100 is adapted for applying topping onto associated product(s), said system comprising:
- a support (see FIG. 5), such as a conveyor, a robot and/or a tray, for supporting the associated product(s),
- a container 300, said container comprising:
   - a plurality of gates 400 (See FIG. 1),
wherein, the gates 400 are movably arranged at the bottom of the container 300.

The gates 400 are movable in a horizontal direction, wherein the gates 400 are adapted to automatically being moved in a horizontal direction, such as by a motor or a (pneumatic) cylinder 800.

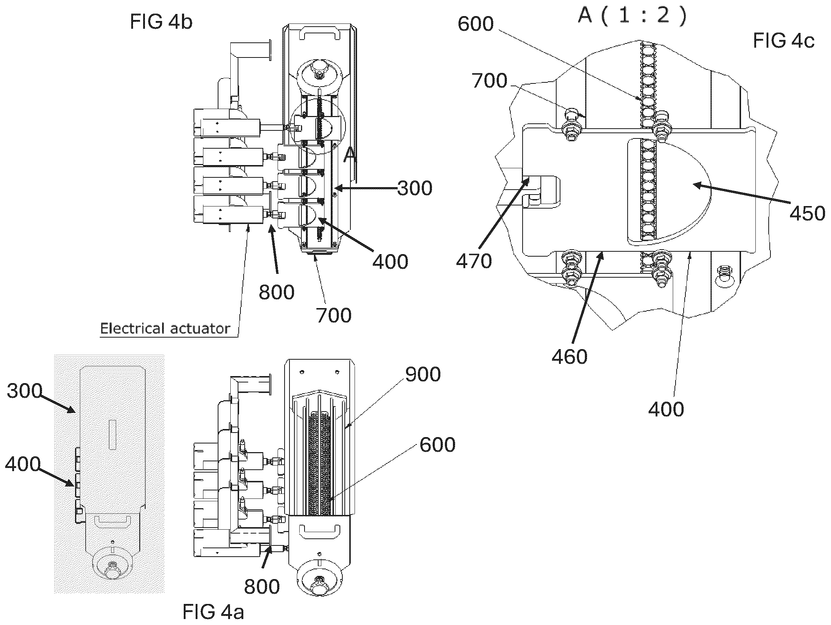

FIG. 4a-b illustrates a container 300 with gates 400.

FIG. 4a illustrates the container 300 from the top.

FIG. 4b illustrates the container 300 from the bottom.

FIG. 4c illustrates the container 300 with a brush 600 and plate 700 from the bottom.

The features of the container in FIG. 4a-c are the same as described under FIG. 1 and 2.

Moreover, the container in FIG. 4a-c further comprises a handle 340, preferably arranged at the end of 310 of the container 300.

FIG. 5 illustrates an example of an apply system 100 in a production system.

The support/supporting 200 may be understood as holding, transporting and/or the like.

The support 200 is provided under the products.

The support 200 can be either directly in contact with the product, or indirectly in contact with the product, such as via a form, mould, plate, sheet, pan, etc.

Examples of a support 200 may be:
- As illustrated in FIG. 5 - A conveying system, such as one or more conveyors, moving the product(s).
- A robot moving the products under a container, potentially on a tray (not shown).
- A stationary base/support, where the container is moving over stationary products of the base/support (not shown).
- The container 300 may be a stationary container or a moving container (not shown).

Moreover, in FIG. 5 the container 300 is arranged on a frame 500 for positioning the container 300 above the support 200.

The apply system 100 of the invention as illustrated in FIG. 5 relates to a method for applying topping onto a product, wherein said method comprises the steps of:
- providing products on a support 200, such as a conveyor, a robot and/or a tray,
- moving the products in a first direction by moving the support in a moving direction MD or moving the container 300 in a moving direction,
- detecting the products or the absence of products, preferably by a sensor,
- receiving a signal, such as a command signal, based on the detecting, preferably from a control system,
- opening one or more gates 400 of a container 300 by moving the gates 400 in a first horizontal direction based on the signal,
   - the opening movement being automatically performed, preferably by a motor or a (pneumatic) cylinder 800,
   - said opening of the gate(s) 400 being made while the product is moving under the gates 400 of the container 300 and/or while the container 300 is moving over the support 200,
- applying topping onto at least a part of the products, preferably applying topping onto at least substantially a first half of the product,
The method may further comprise the steps of:
- moving the one or more gates 400 in a second horizontal direction, being the opposite horizontal direction than the first horizontal direction, said moving performs a closing of the one or more gates 400 of a container 300,
   - the movement(s) being automatically performed, preferably by a motor,
   - said closing of the gate(s) 400 being made while the product is moving under the gates 400 of the container 300,
- if needed applying topping onto at least a remaining part of the products, preferably applying topping onto a second half of the product.

And may even further comprise the steps of:
- filling a container 300 with topping, and
- rotating a brush 600, preferably at least while moving the gates 400.

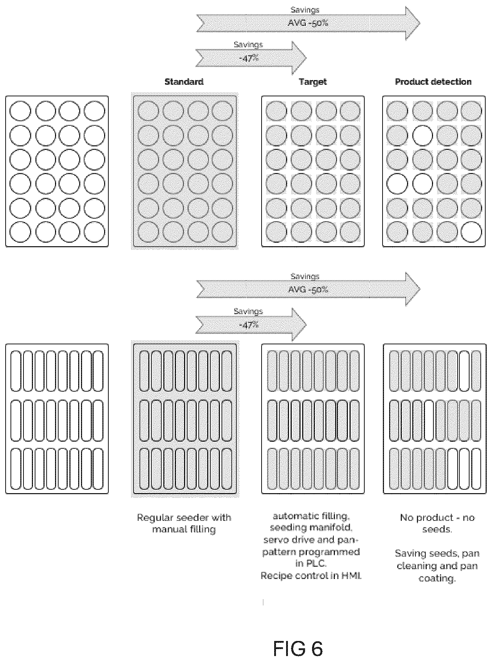

FIG. 6 examples of targeting products to be applied topping.

The invention, as illustrated in FIG. 6, allows to apply the topping specifically targeted to the shape, size, form etc. of the product and the amount of topping not being applied to the product but ending up as waste topping is decreased enormously and may even be completely eliminated.

The moving provides opening up for the topping to be applied onto the products.

Furthermore, the invention allows for detecting if products in a (predetermined) arrangement, such as one or more row(s)/array(s), is missing, and thereby does not apply topping at the spot(s) of the missing product(s).

To obtain the detection, the apply system may further comprise one or more of:
- A sensor for detecting a product and/or the absence of a product (not shown).
- A servo drive (not shown), preferably being adapted for receiving a signal, such as a command signal, from a control system, and transmitting the signal in order to perform a motion of the gates.
- A PLC control (not shown), for monitoring an input of signal(s) and making decisions based upon a pattern program in order to control the output of the topping from the container, said output of topping being controlled by the motion of the gates.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### REFERENCE LIST

Apply system (100)
Support (200)
Container (300)
   End of container (310)
   Cutout (320) for plate
   Cutout (330) for brush
   Handle (340)
Gate (400)
   Cutout (450)
   Recess (460)
   Portion for engagement (470)
Frame (500)
Brush (600)
Plate (700)
   Holes (750)
Cylinder (800)
Cradle (900)
Transverse direction (TD) relative to the container
Longitudinal direction (LD) relative to the container
Moving direction (MD)

## Claims

1. An apply system (100) adapted for applying topping onto associated product(s), said system comprising:
- a support (200), such as a conveyor, a robot and/or a tray, for supporting the associated product(s),
- a container (300), said container comprising:
- a plurality of gates (400),
wherein, the gates (400) are movably arranged at the bottom of the container (300).

2. An apply system (100) according to claim 1, wherein said container (300) is arranged on a frame (500) for positioning the container (300) above the support (200).

3. An apply system (100) according to one or more of the preceding claims, wherein the gates (400) are movable at least substantially in a horizontal direction,
- preferably, wherein the gates (400) are adapted to automatically being moved in a horizontal direction, such as by a motor or a (pneumatic) cylinder.

4. An apply system (100) according to one or more of the preceding claims, wherein the gates (400) are movable in a transverse direction (TD) relative to the container.

5. An apply system (100) according to one or more of the preceding claims, wherein the gates (400) comprise a cutout (450),
preferably said cutout (450) having the shape of the half shape of the product to be applied topping,
said preferable shapes of the cutouts may being:
- shape of a half circle,
- shape of a half eclipse,
- shape of a half triangle,
- shape of a half quadrilateral, and/or
- shape of a half éclair.

6. An apply system (100) according to one or more of the preceding claims, wherein the gates (400) comprise at least one recess (460) for enabling sliding of the gates (400) in a horizontal direction,
- preferably two recesses (460) arranged at least substantially at two sides of the gates (400).

7. An apply system (100) according to one or more of the preceding claims, wherein the system further comprises:
- a brush (600)
and/or
- a plate (700).

8. An apply system (100) according to claim 8, wherein the plate (700) comprises holes (750),
- said holes (750) preferably being arranged in a middle section of the plate (700), and/or
- said holes (750) preferably being holes in one or more rows on the plate (700). preferably the plate (700) is movable in a longitudinal direction (LD) relative to the container (300), preferably the plate (700) is adapted to be insertable from an end (310) of the container, such as insertable through a cutout (320) in the end of the container.

9. An apply system (100) according to one or more of the preceding claims, wherein the brush (600) is arranged rotatably in the bottom part, such as the lower half part, of the container (300),
- preferably the brush (600) is adapted to be insertable from an end (310) of the container, such as insertable through a cutout (330) in the end of the container.

10. An apply system (100) according to one or more of the preceding claims, wherein the apply system further comprises:
- a sensor for detecting a product and/or the absence of a product.

11. An apply system (100) according to one or more of the preceding claims, wherein the apply system further comprises:
- a servo drive,
preferably being adapted for receiving a signal, such as a command signal, from a control system, and transmits the signal in order to perform a motion of the gates.

12. An apply system (100) according to one or more of the preceding claims, wherein the apply system further comprises:
- a PLC control, for monitoring an input of signal(s) and making decisions based upon a pattern program in order to control the output of the topping from the container, said output of topping being controlled by the motion of the gates.

13. **A method for applying topping** onto a product, preferably with an applying system (100) according to one or more of claim 1-13, wherein said method comprises the steps of:
- providing products on a support (200), such as a conveyor, a robot and/or a tray,
- moving the products in a first direction by moving the support (200) in a moving direction (MD) or moving the container (300) in a moving direction (MD),
- detecting the products or the absence of products, preferably by a sensor,
- receiving a signal, such as a command signal, based on the detecting, preferably from a control system,
- opening one or more gates (400) of a container (300) by moving the gates (400) in a first horizontal direction based on the signal,
- the opening movement being automatically performed, preferably by a motor or a (pneumatic) cylinder,
- said opening of the gate(s) (400) being made while the product is moving under the gates of the container (300) and/or while the container (300) is moving over the support (200),
- applying topping onto at least a part of the products, preferably applying topping onto at least substantially a first half part of the product,
wherein the steps of the method can be executed in any order and/or executed simultaneously.

14. A method according to one or more of claim 14, wherein said method further comprises the steps of:
- moving the one or more gates (400) in a second horizontal direction, being the opposite horizontal direction than the first horizontal direction, said moving performs a closing of the one or more gates (400) of a container (300),
- the movement(s) being automatically performed, preferably by a motor,
- said closing of the gate(s) (400) being made while the product is moving under the gates of the container (300),
- if needed applying topping onto at least a remaining part of the product(s), preferably applying topping onto a second half of the product(s).

15. A method according to one or more of claim 13-14, wherein said method further comprises the steps of:
- filling a container (300) with topping, and
- rotating a brush (600), preferably at least while moving the gates (400).
